# EUROPÄISCHE PATENTSCHRIFT

(11) **EP 1 724 896 B1**
(45) Veröffentlichungstag und Bekanntmachung des Hinweises auf die Patenterteilung: **24.08.2011**
(21) Anmeldenummer: 06009800.1
(22) Anmeldetag: 12.05.2006
(51) Int. Cl.: H02G 3/06, H02G 3/10

(54) **Halter für einen Kabelkanal**
Holder for a conduit channel
Support pour une goulotte

(30) Priorität: 18.05.2005 DE 102005022756
(43) Veröffentlichungstag der Anmeldung: 22.11.2006
(73) Patentinhaber: Hager Electro GmbH & Co. KG, 66440 Blieskastel (DE)
(72) Erfinder: Amendola , Ettore, 57520 Grosbliederstroff (FR); Eberle, Patrick, D-66292 Riegelsberg (DE); Loew Thomas, 66386 St. Ingbert (DE)
(74) Vertreter: Bernhardt, Winfrid

(56) Entgegenhaltungen:
- EP-A- 1 291 995
- EP-A- 1 463 170
- DE-A1- 10 313 838

## Beschreibung

Die Erfindung betrifft einen Halter für einen entlang einer Außenseite eines Zähler- oder/und Verteilerschranks verlaufenden Kabelkanal, wobei der Halter einen ersten, mit dem Zähler- oder/und Verteilerschrank verbindbaren Halterteil und einen zweiten, mit dem Kabelkanal verbindbaren Halterteil aufweist und die Halterteile aneinander in verschiedenen Positionen arretierbar sind.

Halter solcher Art sind aus der EP-A-1 291 995 bekannt. Sie werden auf Verteilerschränken befestigt und dienen der Aufnahme eines gewinkelten Profils, durch das zwischen der Schrankoberseite, einer Installationswand und dem Profil ein Kabelkanal an der oberen Außenseite des Verteilerschranks gebildet ist. Am Verteilerschrank sind Vorkehrungen getroffen, um die Halter daran in unterschiedlichen Abständen zur Installationswand befestigen zu können, zum Beispiel zur Anpassung der Lage des Kabelkanals an unterschiedlich dicke Putzschichten an der Installationswand. Zur Aufnahme der Halter dient jeweils ein Halteblock, der an einer aus Kunststoff bestehenden Innenverkleidung des Zähler- oder/und Verteilerschranks befestigt ist.

Der vorliegenden Erfindung liegt die Aufgabe zugrunde, einen neuen Halter der eingangs erwähnten Art zu schaffen, welcher weitgehend unabhängig von solchen Vorkehrungen am Zähler- oder/und Verteilerschrank Variationen der Position von Kabelkanälen an der Außenseite des Zähler oder/und Verteilerschranks ermöglicht.

Der diese Aufgabe lösende Halter nach der Erfindung ist dadurch gekennzeichnet, dass der erste Halterteil zur Anbringung an der Außenseite des Zähler- oder/und Verteilerschranks vorgesehen ist und in Öffnungen in einer Blechwand des Zähler- oder/und Verteilerschranks einsteckbare Zapfen aufweist.

Vorteilhaft lässt sich ein solcher Halter nach der Erfindung unter geringem Aufwand zur Bearbeitung der Blechwand an gewünschten Positionen an dem Zähler- oder/ und Verteilerschrank anbringen.

In einer bevorzugten Ausführungsform der Erfindung ist der zweite Halterteil auf dem ersten Halterteil verschiebbar und in verschiedenen Verschiebungspositionen arretierbar. Bei dem ersten Halterteil kann es sich um einen länglichen Körper handeln, auf dem ein länglicher Fußteil des im übrigen bügelförmig ausgebildete zweiten Halterteils verschiebbar ist.

Zur Arretierung kann an einem der Halterteile eine Zahnung und an dem anderen Halterteil ein Rastelement für den Eingriff in die Zahnung gebildet sein, wobei das Rastelement vorzugsweise eine in die Zahnung passende Gegenzahnung aufweist. Zum Beispiel kann an dem erwähnten länglichen ersten Halterteil auf dessen dem zweiten Halterteil zugewandter Seite die Zahnung gebildet und in dem erwähnten Fußteil ein Fenster vorgesehen sein, durch das ein mit dem zweiten Halterteil verbundenes, elastisch abbiegbares Rastelement hindurch auf die Zahnung zugreift.

In der bevorzugten Ausführungsform der Erfindung ist der erste Halterteil mit hinter schnittenen Zapfen versehen.

Diese Zapfen können unter Bildung senkrecht zur Steckrichtung elastisch abbiegbarer Zapfensegmente geschlitzt sein, wobei die elastischen Zapfensegmente zum Beispiel hinter Stecköffnungen in einer Blechwand des Zähler- oder/und Verteilerschrankes einrasten.

In der bevorzugten Ausführungsform der Erfindung sind die Schlitzbreiten der Zapfen in Steckrichtung veränderlich und in dem Zapfen ist ein Schieber zur Aufspreizung der Zapfensegmente zwecks Verklemmung in den Stecköffnungen angeordnet.

Vorzugsweise lässt sich dieser Schieber durch den zweiten Halterteil beim Zusammensetzen der Halterteile betätigen, wobei ggf. gleichzeitig mit dem Aufschieben des zweiten Halterteils auf den am Schrank provisorisch angebrachten ersten Halterteil eine Befestigung des ersten Halterteils am Schrank erfolgt. Ein Betätigungselement des Schiebers kann in eine am ersten Halterteil vorgesehene Führungsnut eingreifen und dort durch einen mit dem zweiten Halterteil verbundenen, in der Führungsnut geführten Steg betätigt werden, wobei zum Beispiel eine Verschlussbewegung ent-gegengesetzt zur Steckrichtung der Zapfen auf das Betätigungselement übertragen wird.

Die Erfindung wird nachfolgend anhand eines Ausführungsbeispiels und der beiliegenden, sich auf dieses Ausführungsbeispiel beziehenden Zeichnungen näher erläutert. Es zeigen:

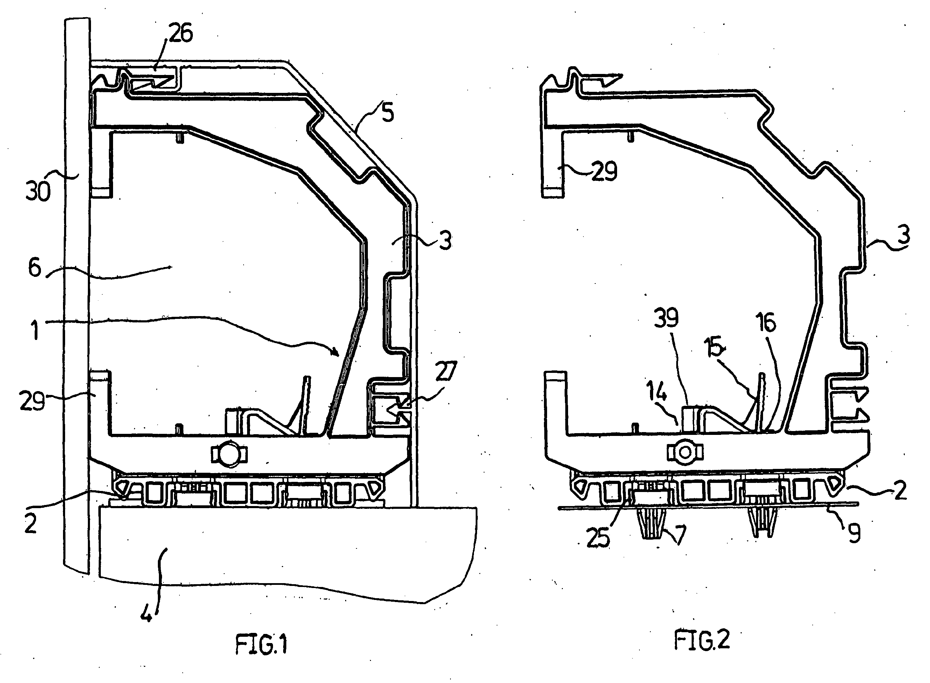

- Fig. 1: einen Halter nach der Erfindung in einer Seitenansicht im Einbauzustand in einem Kabelkanal,
- Fig. 2: den mit einer Blechwand eines Verteilerschranks verbundenen Halter von Fig. 1,
- Fig. 3 bis 7: verschiedene Teile des Halters von Fig. 1 und 2, und
- Fig. 8: eine den Aufbau eines Kabelkanals mit Hilfe des Halters von Fig. 1 bis 5 erläuternde Darstellung.

Ein Halter 1 weist als ersten Halterteil ein längliches Zwischenstück 2 und einen mit dem Zwischenstück 2 verbindbaren bügelförmigen zweiten Halterteil 3 auf. Das Zwischenstück 2 lässt sich an einem Verteilerschrank 4 befestigen. Der bügelförmige Halterteil 3 ist mit einem gewinkelten Profil 5 für die Bildung eines Kabelkanals 6 über dem Verteilerschrank 4 verbindbar. Das Profil 5 könnte auch rund sein.

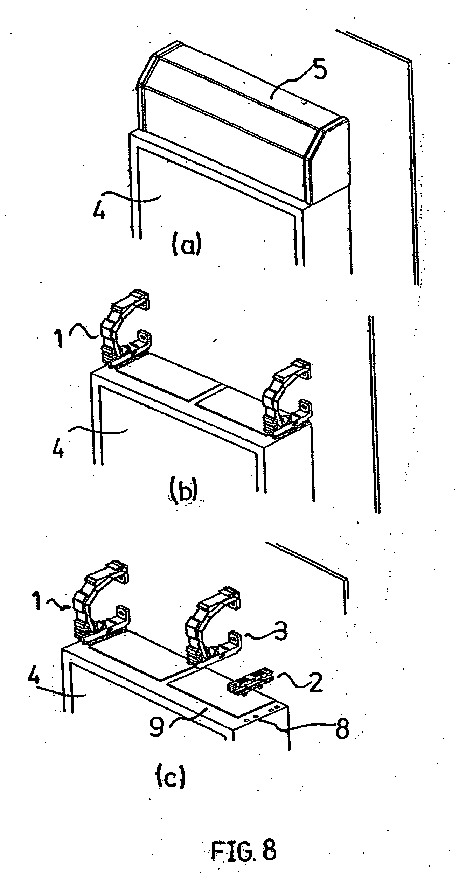

Von dem länglichen Zwischenstück 2, welches eine Vielzahl von Ausnehmungen zur Vermeidung von Materialhäufungen aufweist, stehen zwei Zapfen 7 vor, welche in Öffnungen 8 (Fig. 8c) in einer Blechwand 9 des Verteilerschranks 4 einsteckbar sind.

Die hinterschnittenen Zapfen 7 weisen jeweils einen Längsschlitz 32 auf, welcher die Zapfen in zwei elastisch verbiegbare Zapfensegmente 33 unterteilt.

Von Schenkeln eines im Querschnitt U-förmigen Fußteils 10 des Halterteils 3 stehen nach innen Führungsstege 11 vor, welche in Längsnuten 12 am Zwischenstück 2 eingreifen, so dass der Halterteil 3 auf dem Zwischenstück 2 in Richtung der Längsnuten 12 verschiebbar ist.

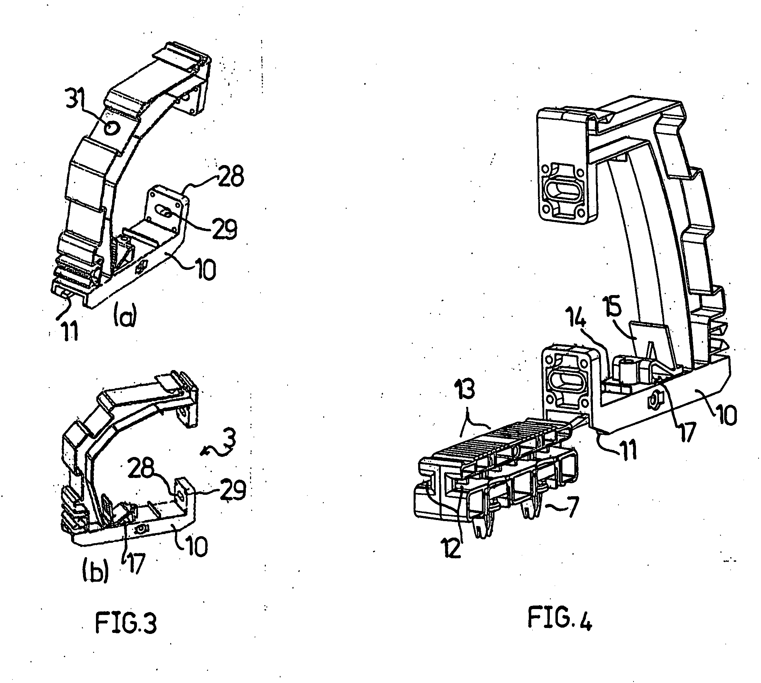

Auf seiner dem Halterteil 3 zugewandten Seite weist das Zwischenstück 2 eine Zahnung 13 auf, in der ein bei 14 mit dem Fußteil 10 verbundenes, im Querschnitt Z-förmiges Rastelement 15 einrasten kann. Das elastisch aus der Rastposition abbiegbare Rastelement 15 weist selbst bei 16 eine Gegenzahnung 34 auf, welche durch ein Fenster 17 (Fig. 3) in dem Fußteil 10 hindurchtreten und in die Zahnung 13 eingreifen kann.

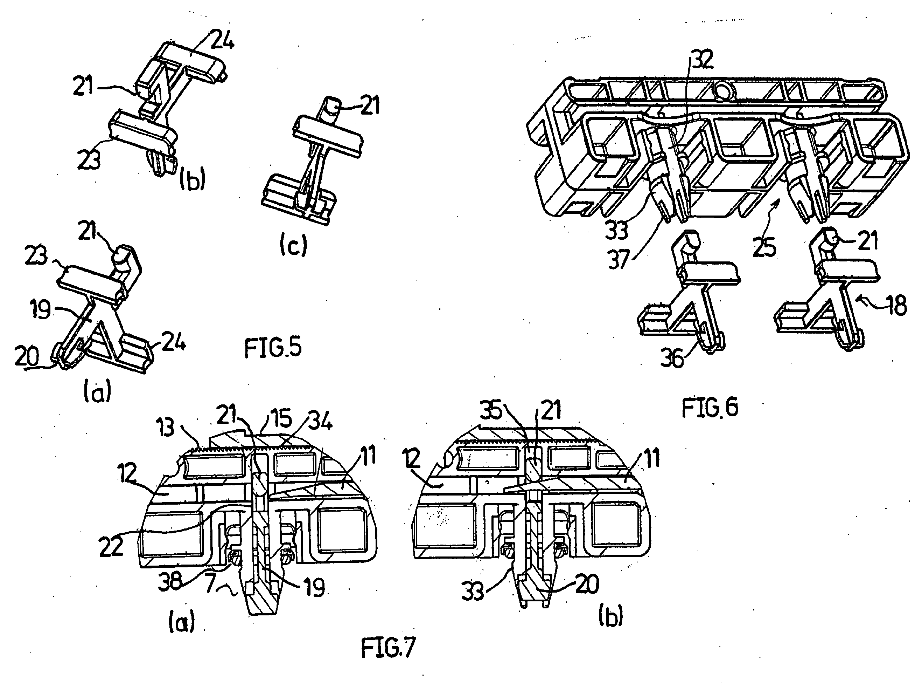

Ein in Fig. 5 gezeigter Verriegelungsschieber 18 weist ein Mittelstück 19 mit einem im Querschnitt gekreuzten Endteil 20 auf. Das Mittelstück 19 lässt sich zwischen den beiden Segmenten 33 des Zapfens 7 einschieben, wobei eine Endabwinklung 21 durch eine Öffnung 22 (Fig. 7) hindurch in eine der Längsnuten 12 des Zwischenstücks 2 und schließlich in eine der Öffnung 22 gegenüberliegende Ausnehmung 35 hinein gelangt. Flügel 36 des Endstücks 20 treten in Schlitze 37 in den beiden Segmenten 33.

Von dem Mittelstück 19 sich entgegensetzten Richtungen erstreckende T-Stücke 23 und 24 finden jeweils Platz in einer an dem Zwischenstück gebildeten, zum Verteilerschrank 4 hin offenen Ausnehmung 25.

Die Zapfen 7 lassen sich unter leichter Verbiegung der Zapfensegmente 33 in die Löcher 8 einsetzen. Beim Aufschieben des Halterteils 3 auf das Verbindungsstück 2 greifen die Führungsstege 11 am Fußteil 10 des Halterteils 3 in die Längsnuten 12 am Zwischenstück 2 ein, und einer der Stege 11 untergreift die gerundete Endabwinklung 21 des Verriegelungsschiebers 18, wie Fig. 7b zeigt. Mit dem Anheben der Verriegelungsschieber 18 verschieben sich die im Querschnitt gekreuzten Endteile 20 der Verriegelungsschieber 18 zwischen den beiden Zapfensegmenten 33 in Richtung zur Blechwand 9 und spreizen die Zapfensegmente 33 auf, so dass es zu einer Verklemmung der Zapfen 7 an der Blechwand 9 kommt. Ringdichtungen 38 dichten die Löcher 8 ab. Nach Entfernen des Halteteils 3 lässt sich die Verklemmung durch Verschiebung der Verriegelungsschieber 18 in Richtung zur Blechwand 9 lösen, wobei hierzu die T-Stücke 23 und 24 genutzt werden.

Die Zahnungen 13 und 34 sind derart ausgebildet, dass sich der Halterteil 3 im eingerasteten Zustand des Rastelements 15 in Richtung zur Schrankrückseite auf dem Zwischenstück 2 verschieben lässt. Zur Verschiebung des Halterteils 3 in entgegengesetzter Richtung muss das Rastelement 15 in Richtung zur offenen Bügelseite des Halterteils 3 hin abgebogen werden, um die am Rastelement 15 gebildete Gegenzahnung 34 aus dem Eingriff mit der Zahnung 13 zu lösen. In der gewünschten Position wird das Rastelement 15 losgelassen und die Gegenzahnung 34 rastet in die Zahnung 13 ein.

Zur Bildung des Kabelkanals 6 kann das Profil 5 bei 26 und 27 auf den Halterteil 3 aufgesteckt werden und an diesem einrasten.

Langlochöffnungen 28 in Endabwinklungen 29 des bügelförmigen Halterteils 3 können zur Befestigung des Halterteils an einer Montagewand 30 oder bei freistehenden Verteilerschränken an einer rückseitigen Abdeckung des Kabelkanals genutzt werden. Eine Öffnung 31 (Fig. 3a) in dem bügelförmigen Halteteil erlaubt die Durchführung eines Schraubendrehers.

Das in Fig. 4 gezeigte Zwischenstück lässt sich sowohl auf der rechten als auch linken Schrankseite verwenden, wobei es um 180° zu drehen ist. Je nach Anordnung rechts oder links kommt eines der beiden gezeigten Felder der Zahnung 13 dabei zum Einsatz.

Der bügelförmige Halteteil 3 lässt sich auf dem Zwischenstück 2 zusätzlich durch z. B. bei 39 eindrehbare Schraube sichern.

## Patentansprüche

1. Halter für einen entlang einer Außenseite eines Zähler- oder/und Verteilerschranks (4) verlaufenden Kabelkanal (5), wobei der Halter (1) einen ersten, mit dem Zähler- oder/und Verteilerschrank (4) verbindbaren Halterteil (2) und einen zweiten, mit dem Kabelkanal (4) verbindbaren Halterteil (3) aufweist und wobei die Halterteile (2, 3) aneinander in verschiedenen Positionen arretierbar sind, **dadurch gekennzeichnet,**
**dass** der erste Halterteil (2) zur Anbringung an der Außenseite des Zähler- oder/und Verteilerschranks (4) vorgesehen ist und Zapfen aufweist, welche in Öffnungen (8) einer Blechwand (9) des Zähler- oder/und Verteilerschranks (4) einsteckbar sind.

2. Halter nach Anspruch 1,
**dadurch gekennzeichnet,**
**dass** der zweite Halterteil (3) an dem ersten Halterteil (2) in verschiedenen Abständen zur Rückseite des Zähler- oder/und Verteilerschranks (4) arretierbar ist.

3. Halter nach Anspruch 1 oder 2,
**dadurch gekennzeichnet,**
**dass** der zweite Halterteil (3) auf dem ersten Halterteil (2) verschiebbar und in verschiedenen Verschiebungspositionen arretierbar ist.

4. Halter nach einem der Ansprüche 1 bis 3,
**dadurch gekennzeichnet,**
**dass** zur Arretierung der Halterteile (2, 3) aneinander an einem Halterteil (2) eine Zahnung (13) und an dem anderen Halterteil (3) ein Rastelement (15) für den Eingriff in die Zahnung (13) gebildet ist.

5. Halter nach Anspruch 4,
**dadurch gekennzeichnet,**
**dass** das Rastelement (15) eine in die Zahnung (13) passende Gegenzahnung (16) aufweist.

6. Halter nach einem der Ansprüche 1 bis 5,
**dadurch gekennzeichnet,**
**dass** die Zapfen (7) unter Bildung senkrecht zur Steckrichtung elastisch abbiegbarer Zapfensegmente geschlitzt sind.

7. Halter nach Anspruch 6,
**dadurch gekennzeichnet,**
**dass** die Breite eines Zapfenschlitzes in Steckrichtung veränderlich und in dem Zapfenschlitz ein Schieber (18) zur Aufspreizung des Zapfensegmente angeordnet ist.

8. Halter nach Anspruch 7,
**dadurch gekennzeichnet,**
**dass** der Schieber (18) zur Betätigung durch den zweiten Halterteil (3) beim Zusammensetzen der Halterteile (2, 3) vorgesehen ist.

9. Halter nach Anspruch 8,
**dadurch gekennzeichnet,**
**dass** der zweite Halterteil (3) den Schieber (18) entgegen der Steckrichtung der Zapfen (7) bewegt.

10. Halter nach einem der Ansprüche 7 bis 9,
**dadurch gekennzeichnet,**
**dass** ein Betätigungselement (21) des Schiebers in eine an dem ersten Halterteil (2) vorgesehene Nut (12) hineinsteht und durch einen in die Nut eingreifenden, mit dem zweiten Halterteil verbundenen Führungssteg (11) bewegbar ist.

## Claims

1. Holder for a cable channel (5) which runs along an outer face of a meter or/and distribution cabinet (4), with the holder (1) having a first holder part (2), which can be connected to the meter or/and distribution cabinet (4), and a second holder part (3), which can be connected to the cable channel (5), and it being possible to lock the holder parts (2, 3) to one another in various positions,
**characterized**
**in that** the first holder part (2) is intended to be mounted on the outer face of the meter or/and distribution cabinet (4) and has pins which can be inserted into openings (8) in a sheet metal wall (9) of the meter or/and distribution cabinet (4).

2. Holder according to Claim 1,
**characterized**
**in that**
the second holder part (3) can be locked to the first holder part (2) at various distances from the rear face of the meter or/and distribution cabinet (4).

3. Holder according to Claim 1 or 2,
**characterized**
**in that**
the second holder part (3) can be displaced on the first holder part (2) and can be locked in various displacement positions.

4. Holder according to one of Claims 1 to 3,
**characterized**
**in that**,
in order to lock the holder parts (2, 3) to one another, a tooth system (13) is formed on one holder part (2) and a latching element (15) for engaging in the tooth system (13) is formed on the other holder part (3).

5. Holder according to Claim 4,
**characterized**
**in that**
the latching element (15) has a mating tooth system (16) which fits in the tooth system (13).

6. Holder according to one of Claims 1 to 5, **characterized**
**in that**
the pins (7) are slotted so as to form pin segments which can be elastically bent perpendicular to the insertion direction.

7. Holder according to Claim 6,
**characterized**
**in that**
the width of a pin slot in the insertion direction is variable and a slide (18) for spreading out the pin segments is arranged in the pin slot.

8. Holder according to Claim 7,
**characterised**
**in that**
the slide (18) is intended to be operated by the second holder part (3) when the holder parts (2, 3) are assembled.

9. Holder according to Claim 8,
**characterised**
**in that**
the second holder part (3) moves the slide (18) in the opposite direction to the insertion direction of the pins (7).

10. Holder according to one of Claims 7 to 9,
**characterized**
**in that**
an operating element (21) of the slide projects into a groove (12), which is provided on the first holder part (2), and can be moved by a guide web (11) which engages in the groove and is connected to the second holder part.

## Revendications

1. Support pour une goulotte à câbles (5) qui s'étend le long d'une face extérieure d'une armoire de compteur et/ou de distributeur (4), ledit support (1) comprenant une première partie de support (2) susceptible d'être reliée à l'armoire de compteur et/ou de distributeur (4) et une seconde partie de support (3) susceptible d'être reliée à la goulotte à câbles (5), et dans lequel les parties de support (2, 3) sont susceptibles d'être bloquées l'une contre l'autre dans différentes positions, **caractérisé en ce que**
la première partie de support (2) est prévue pour être montée sur la face extérieure de l'armoire de compteur et/ou de distributeur (4) et comporte des tenons qui peuvent être enfichés dans des ouvertures (8) d'une paroi en tôle (9) de l'armoire de compteur et/ou de distributeur (4).

2. Support selon la revendication 1,
**caractérisé en ce que** la seconde partie de support (3) peut être bloquée sur la première partie de support (2) à différentes distances par rapport à la face postérieure de l'armoire de compteur et/ou de distributeur (4).

3. Support selon la revendication 1 ou 2,
**caractérisé en ce que** la seconde partie de support (3) est déplaçable sur la première partie de support (2) et susceptible d'être bloquée dans différentes positions en déplacement.

4. Support selon l'une des revendications 1 à 3,
**caractérisé en ce que** pour bloquer les parties de support (2, 3) l'une contre l'autre, une denture (13) est formé sur une partie de support (2) et un élément d'enclenchement (15) destiné à s'engager dans la denture (13) est formé sur l'autre partie de support (3).

5. Support selon la revendication 4,
**caractérisé en ce que** l'élément d'enclenchement (15) comprend une denture antagoniste (16) ajustée à la denture (13).

6. Support selon l'une des revendications 1 à 5,
**caractérisé en ce que** les tenons (7) sont fendus en formant des segments de tenons susceptible d'être fléchis de manière élastique perpendiculairement à la direction d'enfichage.

7. Support selon la revendication 6,
**caractérisé en ce que** la largeur d'une fente de tenon est variable dans la direction d'enfichage, et **en ce qu'**un coulisseau (18) et agencé dans la fente de tenon pour écarter les segments de tenons.

8. Support selon la revendication 7,
**caractérisé en ce que** le coulisseau (18) est prévu pour être actionné par la seconde partie de support (3) lors de l'assemblage des parties de support (2, 3).

9. Support selon la revendication 8,
**caractérisé en ce que** la seconde partie de support (3) déplace le coulisseau (18) en sens opposé à la direction d'enfichage des tenons (7).

10. Support selon l'une des revendications 7 à 9,
**caractérisé en ce qu'**un élément d'actionnement (21) du coulisseau pénètre dans une gorge (12) prévue sur la première partie de support (2) et est déplaçable au moyen d'une barrette de guidage (11) engagée dans la gorge et reliée à la seconde partie de support.
